# EUROPEAN PATENT APPLICATION

(11) **EP 0 748 606 A1**
(43) Date of publication of application: **18.12.1996**
(21) Application number: 95304072.2
(22) Date of filing: 13.06.1995
(51) Int. Cl.: A47J 47/00

(54) **Disposable cover for a chopping board**

(71) Applicant: Wang, Mon-chang, Taichung (TW)
(72) Inventor: Wang, Mon-chang, Taichung (TW)
(74) Representative: Jennings, Nigel Robin

(57) **Abstract**

A disposable cover (10) for a chopping board (20) includes two elongate opposed side faces and two short opposed side faces. A compartment (16) is defined in the underside of the cover (10) whose height is the same as that of the chopping board for securely receiving the chopping board therein. A pair of opposed handles (14) is formed on a respective one of the two short side faces of the cover.

## Description

The present invention relates to a disposable cover, and more particularly to a disposable cover for a chopping board.

A conventional chopping board is used to process food such as meat, vegetables and the like on a top face thereof by means of kitchen knives. In such a way, a plurality of dents are formed on the top face of the chopping board during long-term utilization such that the processed food dregs are easily left in the dents formed on the top face of the chopping board, thereby easily incurring sanitary problems.

The present invention has arisen to mitigate and/or obviate the disadvantages of the conventional chopping board.

The primary objective of the present invention is to provide a disposable cover which is easy to be exchanged without having to replace the chopping board.

In accordance with one aspect of the present invention, there is provided a cover comprising two elongated opposite side faces and two short opposite side faces. A compartment is defined in an underside of the cover and is flush with the chopping board for securely receiving the chopping board therein. A pair of grasping handles each are formed on a corresponding one of the two short opposite side faces of the cover respectively.

Further objectives and advantages of the present invention will become apparent from a careful reading of the detailed description provided hereinbelow, with appropriate reference to the accompanying drawings.
In the drawings:
Fig. 1 is a perspective view of a disposable cover for a chopping board in accordance with the present invention;
Fig. 2 is a front plan cross-sectional view of the disposable cover as shown in Fig. 1; and
Fig. 3 is a front plan cross-sectional view of a multi-layer cover for a chopping board.

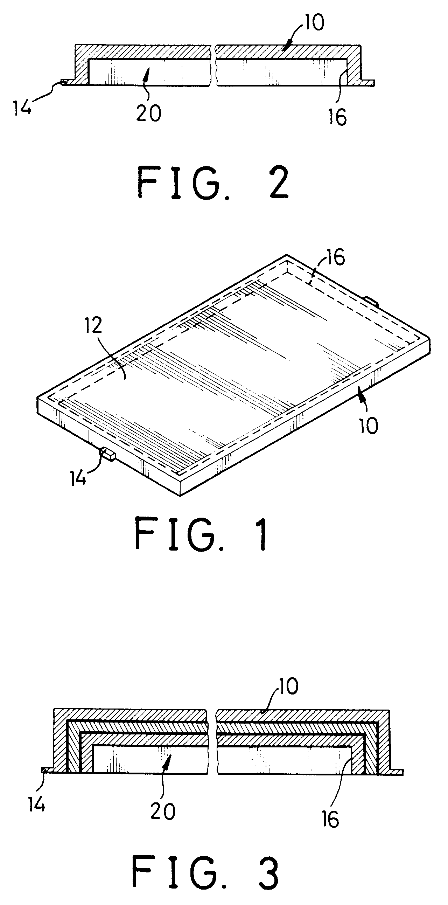

Referring to the drawings and initially to Figs. 1 and 2, a disposable rectangular cover 10 in accordance with the present invention is provided for a rectangular chopping board 20 and comprises two elongated opposite side faces and two short opposite side faces. A rectangular compartment 16 is defined in an underside of the cover 10 and is flush with the chopping board 20 for securely receiving the chopping board 20 therein. A pair of grasping handles 14 each are formed on a corresponding one of the two short opposite side faces of the cover 10 respectively.

Preferably, the disposable cover 10 is made of a resilient material. In addition, the chopping board 20 has a dimension slightly greater than that of the compartment 16 of the cover 10 such that the chopping board 20 can be securely fitted in the compartment 16 of the cover 10, without being easily detached therefrom.

By such an arrangement, food such as vegetables, meat and the like can be managed and processed on the top face 12 of the cover 10 by means of kitchen knives without being directly in contact with the chopping board 20, thereby avoiding deforming or wearing the chopping board 20. The cover 10 can be exchanged and disposed when being worn out during long-term utilization simply by means of exerting an torque action on the grasping handles 14 so as to draw the grasping handles 14 upwardly, thereby detaching the chopping board 20 from the cover 10, without the need to replace the chopping board 20 itself.

Referring to Fig. 3, there are a plurality of covers 10 stacked on the chopping board 20 so as to form a multi-layer cover. The chopping board 20 is securely received in the compartment 16 defined in the lowermost cover 10. The grasping handles 14 are respectively formed on a corresponding one of the two short opposite side faces of the uppermost cover 10.

It should be clear to those skilled in the art that further embodiments of the present invention may be made without departing from the teachings of the present invention.

## Claims

1. A cover (10) for a chopping board (20) and comprising two elongated opposite side faces and two short opposite side faces, a compartment (16) defined in an underside of said cover (10) and flush with said chopping board (20) for securely receiving said chopping board (20) therein, and a pair of grasping handles (14) each formed on a corresponding one of said two short opposite side faces of said cover (10) respectively.

2. The disposable cover in accordance with claim 1, wherein said cover (10) is made of a resilient material.

3. The disposable cover in accordance with claim 2, wherein said chopping board (20) has a dimension slightly greater than that of said compartment (16) of said cover (10).

4. A chopping board cover (10) comprising a planar portion affording an upper chopping surface and a depending peripheral flange which together with the planar portion defines a compartment (16) adapted to receive the chopping board (20), a pair of opposed handles (14) being formed on the peripheral flange.

5. A chopping board cover (10) as claimed in claim 4 in combination with a chopping board (20), the shape and height of the chopping board (20) being the same as those of the compartment (16).
